# DEMANDE DE BREVET EUROPEEN

(11) **EP 1 369 606 A1**
(43) Date de publication de la demande: **10.12.2003**
(21) Numéro de dépôt: 03356085.5
(22) Date de dépôt: 05.06.2003
(51) Int. Cl.: F16C 25/04, F16C 29/02, B23Q 5/40, B44B 3/06

(54) **Appareil de marquage comprenant au moins un organe de guidage et au moins un chariot d'entraînement**

(30) Priorité: 06.06.2002 FR 0206972
(71) Demandeur: TECHNIFOR, 01700 Miribel (FR)
(72) Inventeur: Therond, Marcel, 69140 Rillieux-La-Pape (FR)
(74) Mandataire: Schouller, Jean-Philippe

(57) **Abrégé**

Cet appareil de marquage (2) comprend un bâti (4), un outil de marquage (15) et au moins un chariot (10, 14) d'entraînement monté à coulissement par rapport à au moins deux organes de guidage (8, 8', 12, 12').

Un premier organe de guidage (12) est logé dans une ouverture (16) ménagée dans le chariot, un palier de glissement (18, 20) comprenant un fourreau (20) formé d'une résine polymérisable à l'état solide étant interposé entre ce premier organe de guidage (12) et les parois en regard de l'ouverture correspondante (16), alors qu'il est prévu des moyens de maintien (22) de l'autre organe de guidage (12') par rapport au chariot (14), tout en autorisant un débattement transversal entre le chariot et l'autre organe de guidage, les moyens de maintien (22) délimitant un volume (V) de réception de l'autre organe de guidage (12') qui débouche sur un côté (14') du chariot.

## Description

La présente invention concerne un appareil de marquage comprenant au moins un organe de guidage et au moins un chariot d'entraînement.

Au sens de l'invention, le terme générique d'appareil de marquage désigne tout appareil permettant de réaliser un motif sur la surface d'une pièce, que ce soit par impression, déformation ou enlèvement de matière au niveau de cette surface.

De façon connue, un appareil de marquage comprend un bâti supportant un mécanisme d'entraînement d'un outil de marquage, qui peut être notamment un stylet pneumatique ou une tête de gravure. De manière habituelle, ce mécanisme d'entraînement comporte un élément fixe par rapport au bâti, pourvu de rebords sur lesquels sont disposées deux barres de guidage. Un premier chariot d'entraînement est monté à coulissement sur celles-ci et se trouve lui-même muni de deux barres supplémentaires, qui sont perpendiculaires au premier couple de barres précitées et sont destinées à la réception d'un second chariot d'entraînement auquel est assujetti l'outil de marquage.

Grâce à l'utilisation de ce mécanisme d'entraînement dit « à chariots croisés », l'outil de marquage est propre à se déplacer selon deux directions perpendiculaires entre elles, par rapport au bâti.

Le procédé de montage de chaque chariot sur les barres de guidage qui le reçoivent consiste tout d'abord à ménager au moins un alésage dans ce chariot, puis à rapporter dans chaque alésage au moins un palier auto-lubrifiant, par exemple par collage ou par emmanchement à force. Cet ensemble ainsi constitué est ensuite monté à coulissement sur les barres de guidage.

Ce procédé de montage connu présente cependant certains inconvénients. En effet, il s'accompagne d'une opération de positionnement extrêmement minutieuse de ce chariot par rapport au palier auto-lubrifiant, qui implique un unisage particulièrement précis des alésages précités. Ce procédé induit donc un temps et un coût de fabrication élevés.

Afin de pallier ces inconvénients, il a été proposé, par FR-A-2 805 867, de réaliser un tel palier à partir d'un fourreau formé d'une résine polymérisable à l'état solide. Ce fourreau s'étend alors entre, d'une part, les parois intérieures de l'alésage précité et, d'autre part, la paroi extérieure de l'organe de guidage ou bien une bague, rapportée autour de cette paroi extérieure.

Une telle solution est avantageuse, dans la mesure où elle est notablement plus simple et plus rapide à mettre en oeuvre que la solution faisant appel au palier auto-lubrifiant, collé ou emmanché à force.

Par ailleurs, FR-A-2 056 197 décrit un élément de support et de guidage pour le glissement de pièces coulissantes sur des axes, dans lequel une plaque de support peut être guidée le long de deux axes. L'un de ces axes est en outre supporté et guidé dans un palier de glissement élastique, par exemple réalisé en une matière thermoplastique, qui permet ainsi une déviation élastique.

Dans ces conditions, l'invention vise à proposer un appareil de marquage offrant une simplicité encore accrue, ainsi que des coûts de fabrication encore réduits par rapport à l'enseignement de FR-A-2 805 867, en ce qui concerne le positionnement des chariots d'entraînement sur leurs organes de guidage.

A cet effet, elle a pour objet un appareil de marquage selon la revendication 1.

D'autres caractéristiques de l'invention font l'objet des sous-revendications.

L'invention est décrite ci-dessous, en référence aux dessins annexés, donnés uniquement à titre d'exemples non limitatifs, dans lesquels :
- la figure 1 est une vue en perspective d'un appareil de marquage conforme à l'invention ;
- la figure 2 est une vue de face, à plus grande échelle, illustrant le montage d'un chariot d'entraînement de l'appareil de marquage de la figure 1, sur deux organes de guidage ;
- la figure 3 est une vue en coupe selon la ligne III-III, représentée à la figure 2 ; et
- la figure 4 est une vue partielle de face, analogue à la figure 2, illustrant une première variante de réalisation du chariot d'entraînement.

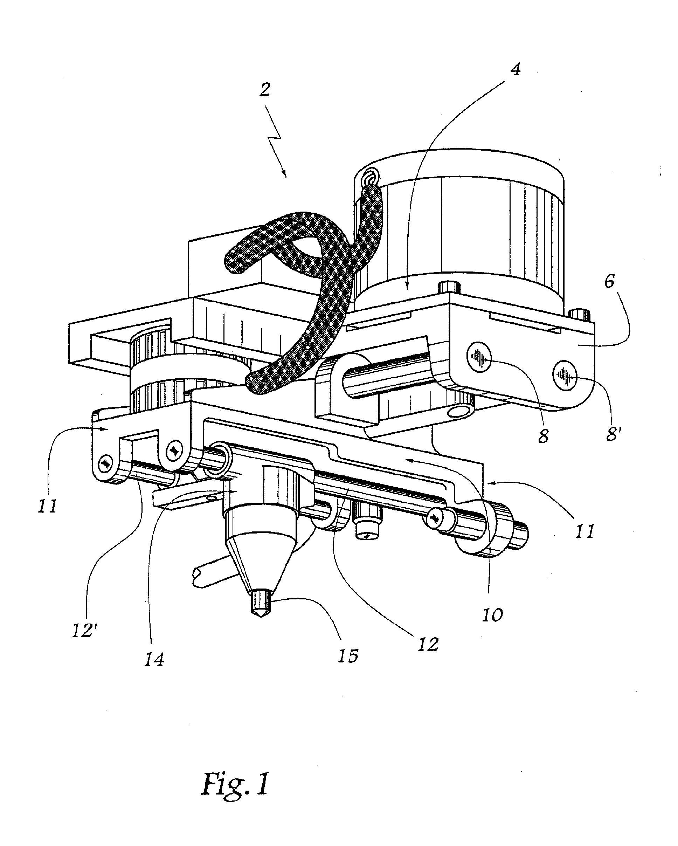

L'appareil de marquage représenté à la figure 1 et désigné dans son ensemble par la référence 2 comprend, de manière connue en soi, un bâti fixe 4 comprenant deux rebords 6 en regard. Ces derniers supportent deux barres 8 et 8', qui constituent des organes de guidage pour le déplacement d'un premier chariot 10, selon l'axe principal de ces barres.

Ce premier chariot d'entraînement 10 est muni de deux rebords 11 en regard, entre lesquels s'étendent deux barres de guidage supplémentaires 12 et 12', les deux paires de barres 8, 8', 12 et 12' étant disposées sensiblement à angle droit.

Les barres 12 et 12' assurent le guidage d'un second chariot 14, sur lequel est rapporté un outil de marquage 15, qui peut être par exemple un stylet pneumatique ou encore une tête de gravure.

Ces deux chariots 10, 14 forment un mécanisme d'entraînement de l'appareil de marquage 2, et assurent le positionnement de l'outil de marquage selon deux directions orthogonales entre elles. La mise en mouvement respective des deux chariots 10, 14 est assurée de manière connue en soi, par l'intermédiaire de moteurs électriques non représentés.

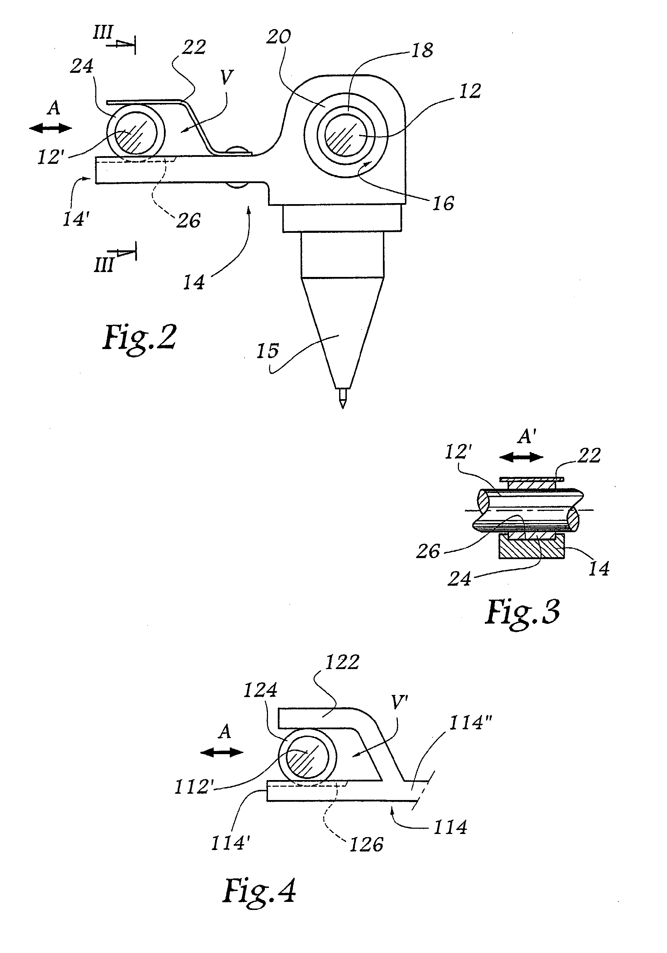

Le montage de chaque chariot d'entraînement sur les barres de guidage va être explicité en référence aux figures 2 et 3. Dans ces dernières, il sera uniquement fait référence au montage du chariot 14 sur les barres 12 et 12', étant entendu que le montage du chariot 10 sur les barres 8 et 8' est analogue.

La figure 2 illustre partiellement le chariot 14, monté sur les deux barres de guidage 12 et 12'.

Ce chariot est creusé d'une ouverture traversante sensiblement cylindrique, désignée dans son ensemble par la référence 16. Cette ouverture reçoit une bague 18, disposée autour de la première barre 8, ainsi qu'un fourreau 20, intercalé entre les parois en regard de la bague 18 et de l'ouverture 16.

Un tel fourreau 20 est réalisé par polymérisation d'une résine, conformément à l'enseignement de FR-A-2 805 867. Il forme ainsi, avec la bague 18, un palier du chariot 14.

A titre de variante, un tel palier peut être uniquement constitué de ce fourreau de résine 20, directement intercalé entre les parois en regard de l'ouverture 16 et de la barre 8. Dans ce mode de réalisation, également décrit dans FR-A-2 805 867, la bague 18 est absente.

Par ailleurs, une lame 22 formant ressort, qui est fixée sur le chariot 14, définit avec celui-ci un volume inférieur V de réception de l'autre barre de guidage 12'. Il est à noter que ce volume V est ouvert transversalement, à l'une de ses extrémités.

Comme le montre la figure 2, la barre 12' est entourée d'une autre bague 24, analogue à celle 18. Cette bague 24 est logée dans une rainure 26, ménagée à la surface supérieure du chariot 14, en regard de la lame ressort 22.

Il convient de noter que cette rainure 26, qui débouche sur le côté 14' du chariot, possède des dimensions transversales supérieures à celles de la bague 24. De la sorte, il existe une possibilité de débattement transversal selon la direction A entre, d'une part, le chariot 14 et, d'autre part, la bague 24 et donc la seconde barre 12'.

En revanche, comme le montre plus précisément la figure 3, la rainure 26 possède des dimensions longitudinales analogues à celle de la bague 24. Ainsi, cette dernière se trouve solidarisée en translation par rapport au chariot 14, selon la direction principale A' de la barre 12'.

En service, le chariot 14 est amené à se déplacer le long des deux barres 12 et 12'. Si ces dernières ne sont pas rigoureusement parallèles, la bague 24 est quand même libre de se déplacer le long de la seconde barre 12', tout en ne restant pas nécessairement à distance constante de la première barre 12.

Par ailleurs, la lame ressort 22 maintient par plaquage la bague 24 contre le fond de la rainure 26. Il est à noter que la raideur de cette lame ressort est appropriée en fonction des efforts induits par l'outil de marquage 15, ainsi qu'en fonction de la puissance des moyens de motorisation.

La figure 4 illustre une variante de réalisation de l'invention. Sur cette figure, les éléments mécaniques analogues à ceux des figures 1 à 3 sont affectés des mêmes numéros de référence, augmentés de 100.

Selon cette variante, la lame ressort 22 est supprimée. A cet effet, le chariot 114 est pourvu d'un bras 122 formant, avec le corps 114" de ce chariot, une fourche dans le volume intérieur V' de laquelle sont reçues la barre 112' et la bague 124.

A titre de variante supplémentaire, non représentée, les deux extrémités de chacune des barres de guidage 8, 8', 12 et 12' peuvent être fixées sur des rebords correspondants, selon l'enseignement de EP-A-0 915 260, c'est-à-dire par l'intermédiaire d'une résine polymérisable.

L'invention permet de réaliser les objectifs précédemment mentionnés.

En effet, dans l'art antérieur décrit par FR-A-2 805 867, il est nécessaire de disposer chaque paire d'organes de guidage de manière rigoureusement parallèle. En effet, si tel n'était pas le cas, le chariot serait susceptible de se bloquer, lors de son coulissement par rapport à ces organes de guidage.

En revanche, dans l'appareil de marquage conforme à l'invention, il n'est pas obligatoire d'agencer les organes de guidage de façon strictement parallèle. De la sorte, le procédé de fabrication correspondant s'en trouve simplifié, ce qui assure une réduction des coûts de réalisation de cet appareil de marquage.

A cet égard, il convient de noter que d'éventuels défauts de parallélisme, entre les organes de guidage, se trouvent compensés par la possibilité de débattement transversal offerte au chariot. Ainsi, ce dernier est à même de glisser latéralement par rapport à l'une des barres, lors de son déplacement, ce qui évite tout risque de coincement.

Enfin, la présence d'un volume de réception débouchant sur un côté du chariot est avantageux par rapport à l'enseignement de FR-A-2 056 197, faisant appel à un palier élastique. En effet, cette disposition permet un montage ou un démontage des chariots 10 et 14, alors même que les barres 12' et 112' ainsi que les paliers 24 et 124 sont en place. Toutes proportions égales par ailleurs, cela permet un défaut de parallélisme plus important entre les barres de guidage. Enfin un défaut de parallélisme n'entraîne pas de déformation élastique, contrairement à ce qui se produit avec la section 14 décrite dans FR-A-2 056 197. De ce fait, grâce à l'invention, il n'y a pas génération d'effort parasite sur les paliers.

## Revendications

1. Appareil de marquage (2) comprenant un bâti (4), un outil de marquage (15) et au moins un chariot (10, 14 ; 114) d'entraînement de cet outil de marquage, le ou chaque chariot étant monté à coulissement par rapport à au moins deux organes de guidage (8, 8', 12, 12' ; 112'), **caractérisé en ce qu'**un premier organe de guidage (12) est logé dans une ouverture (16) ménagée dans le chariot, un palier de glissement (18, 20) comprenant un fourreau (20) formé d'une résine polymérisable à l'état solide étant interposé entre ce premier organe de guidage (12) et les parois en regard de l'ouverture correspondante (16), alors qu'il est prévu des moyens de maintien (22 ; 122), aptes à maintenir le ou chaque autre organe de guidage (12' ; 112') par rapport au chariot (14 ; 114), tout en autorisant un débattement transversal (flèche A) entre le chariot et le ou chaque autre organe de guidage, les moyens de maintien (22 ; 122) délimitant un volume (V ; V') de réception du ou de chaque autre organe de guidage (12' ; 112'), ce volume de réception débouchant sur un côté (14', 114') du chariot.

2. Appareil de marquage selon la revendication 1, **caractérisé en ce que** les moyens de maintien sont des moyens de maintien élastiques (22).

3. Appareil de marquage selon la revendication 1 ou 2, **caractérisé en ce que** les moyens de maintien (22) sont rapportés sur le chariot.

4. Appareil de marquage selon les revendications 2 et 3, **caractérisé en ce que** les moyens de maintien rapportés comprennent au moins un élément élastique (22), en particulier une lame ressort.

5. Appareil de marquage selon la revendication 1 ou 2, **caractérisé en ce que** les moyens de maintien (122) sont formés d'un seul tenant avec le chariot (114).

6. Appareil de marquage selon la revendication 5, **caractérisé en ce que** les moyens de maintien comprennent un bras (122), formant une fourche avec un corps (114'') du chariot (114).

7. Appareil de marquage selon l'une quelconque des revendications précédentes, **caractérisé en ce que** le ou chaque autre organe de guidage (12' ; 112') est reçu dans une bague (24 ; 124) qui est solidaire en translation des moyens de maintien, selon la direction principale (A') de l'organe de guidage, tout en étant solidaire en translation de l'organe de guidage selon la direction transversale (A) de celui-ci.

8. Appareil de marquage selon la revendication 7, **caractérisé en ce que** la bague (24 ; 124) est logée dans une rainure (26 ; 126) ménagée à la surface du chariot (14 ; 114).

9. Appareil de marquage selon la revendication 8, **caractérisé en ce que** la rainure (26 ; 126) débouche sur un côté (14' ; 114') du chariot.
